## Europäisches Patentamt

## European Patent Office

## Office européen des brevets

(19)

(11) Veröffentlichungsnummer: **0 068 236**
**B1**

(12) **EUROPÄISCHE PATENTSCHRIFT**

(45) Veröffentlichungstag der Patentschrift:
04.12.85

(51) Int. Cl.⁴: **F 16 B 12/26**

(21) Anmeldenummer: **82105131.5**

(22) Anmeldetag: **11.06.82**

(54) **Verbindungsbeschlag zum lösbaren Verbinden zweier plattenförmiger Möbelteile.**

(30) Priorität: **11.06.81 DE 3123185**
**14.07.81 DE 3127795**

(43) Veröffentlichungstag der Anmeldung:
**05.01.83 Patentblatt 83/1**

(45) Bekanntmachung des Hinweises auf die Patenterteilung:
**04.12.85 Patentblatt 85/49**

(84) Benannte Vertragsstaaten:
**AT DE FR GB IT**

(56) Entgegenhaltungen:
**DE - A - 1 921 483**
**DE - A - 2 206 684**
**DE - C - 343 537**
**DE - C - 424 366**
**DE - C - 434 225**
**DE - U - 7 414 247**
**GB - A - 1 430 230**

(73) Patentinhaber: **Arturo Salice S.p.A., Via Provinciale Novedratese 10, I-22060 Novedrate (Como) (IT)**

(72) Erfinder: **Der Erfinder hat auf seine Nennung verzichtet**

(74) Vertreter: **Lorenz, Eduard et al, Rechtsanwälte Lorenz, Eduard - Seidler, Bernhard Seidler, Margrit - Gossel, Hans-K. Philipps, Ina, Dr. Widenmayerstrasse 23, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft einen Verbindungsbeschlag zum lösbaren Verbinden zweier winkelig, vorzugsweise rechtwinkelig, aufeinanderstoßender plattenförmiger Möbelteile nach dem Oberbegriff der unabhängigen Patentansprüche.

Bei einem aus der DE-A-2 206 684 bekannten Verbindungsbeschlag dieser Art greift ein federbelasteter Keil oder Drehkeil spannend hinter den verbreiterten Kopf des aus einem Stift bestehenden Gegenbeschlagteils, wobei der Keil oder Drehkeil vor dem Einschub des Stifts in einer aus der Einschuböffnung zurückgeschobenen Stellung auf einem durch eine Stufe des Gehäuses gebildeten Anschlag abgestützt und mit einem in der Einschuböffnung liegenden Stegteil versehen ist, gegen das der Kopf des Stifts beim Einschub stößt und dadurch zur Lösung der Verrastung den Keil oder Drehkeil von seinem Anschlag abschiebt. Der bekannte Verbindungsbeschlag weist nicht nur einen komplizierten Aufbau, sondern auch den Nachteil auf, daß er sich bei einer eventuell erforderlich werdenden Demontage von Möbeln nur schwer wieder lösen läßt.

Aufgabe der Erfindung ist es daher, einen gattungsgemäßen Verbindungsbeschlag zu schaffen, bei dem sich die Verbindung einfach wieder lösen läßt und die Halteeinrichtung zur Sicherung der Montagestellung in einfacher Weise ausgestaltet ist.

Erfindungsgemäß wird diese Aufgabe durch einen ersten Lösungsvorschlag durch die kennzeichnenden Merkmale des Patentanspruchs 1 gelöst.

Zur Vorbereitung der Montage oder zum Lösen der Verbindung wird der Drehkeil mit der von Hand zu ergreifenden Betätigungseinrichtung in Entriegelungsdrehrichtung gedreht, wobei der mit dem Drehkeil verbundene federnde Teil mitverdreht wird. Sobald der Drehkeil seine Entriegelungsstellung erreicht hat, läßt sich der Vorsprung des einen Beschlagteils aus der Ausnehmung des anderen herausziehen. Befindet sich der Vorsprung nicht in der Ausnehmung des anderen Beschlagteils, kann das federnde Teil mit dem gehäusefesten Teil verrasten, wenn der Drehkeil in seine entriegelte Stellung gedreht worden ist, so daß der Drehkeil in dieser Stellung gehalten ist. Da sich in dieser Stellung das die Halteeinrichtung bildende federnde Teil in den Eingangsbereich der Ausnehmung erstreckt, wird es durch den zum Zwecke der Verbindung in die Ausnehmung eingeschobenen Vorsprung gelöst, so daß der Drehkeil in seine den Vorsprung hintergreifende verriegelnde Stellung schnappt. Der Drehkeil ist bei dem erfindungsgemäßen Verbindungsbeschlag durch den federnden Teil lösbar in seiner Montagestellung gehalten, so daß er selbst nicht in dieser durch Anlage gegen einen Anschlag gesichert zu werden braucht und nicht aus seiner Ebene zum Zwecke der Montage verschoben werden muß, wie es bei dem aus der DE-A-2 206 684 bekannten Verbindungsbeschlag der Fall ist.

Die Betätigungseinrichtung zum Entriegeln des Drehkeils kann aus einem rechtwinkelig an einem den Drehkeil lagernden Bolzen befestigten und auf der Oberseite der Deckplatte des Drehkeilgehäuses liegenden Hebel bestehen, der gut von Hand zugänglich ist.

In weiterer Ausgestaltung der Erfindung ist vorgesehen, daß in der Deckplatte des Drehkeilgehäuses konzentrisch zu der Bolzenachse eine mit einem Betätigungshebel versehene Scheibe schwenkbar gelagert ist, die mit einer sektorförmigen Ausnehmung versehen ist, mit der diese den an dem Bolzen befestigten Hebel übergreift. Dabei entspricht der Sektorwinkel etwa dem Winkel, den der kurze, an dem Bolzen befestigte Hebel überstreicht, wenn der Drehkeil aus seiner entriegelten Stellung in seine Verriegelungsstellung schnappt. Wird der mit der Scheibe verbundene Betätigungshebel in die Öffnungsstellung verschwenkt, nimmt die eine Seite der sektorförmigen Ausnehmung den an dem Bolzen befestigten Hebel in die entriegelte Stellung mit. Wird nun beim Zusammenschieben der Beschlagteile die arretierende Einrichtung gelöst, kann der Drehkeil ungehindert in seine verriegelnde Stellung schnappen.

Nach einer Weiterbildung der Erfindung ist vorgesehen, daß zur Lagerung der Scheibe diese einen abgeschrägten Rand und die Deckplatte eine dem Rand entsprechend komplementär hinterschnittene Nut zur Aufnahme des Randes aufweist, daß der mit der Scheibe verbundene Betätigungshebel in einer sektorartigen Ausnehmung der Deckplatte des Drehkeilgehäuses eingelassen ist und daß der Betätigungshebel an seiner endseitigen Stirnseite mit einer Ausnehmung versehen ist, in die in der entriegelten Stellung des Drehkeils ein vorspringender Nocken eingreift, der an dem Umfangsrand der sektorförmigen Ausnehmung vorgesehen ist.

Zum Lösen der Beschlagteile des Verbindungsbeschlages läßt sich der Betätigungshebel mit dem Nocken verrasten, so daß sich die Beschlagteile einfach auseinanderziehen lassen. Zum Verbinden der Beschlagteile miteinander wird jedoch der Drehkeil in der Weise in seine entriegelte Stellung verschwenkt, daß dieser von der in dem Einschubweg des anderen Beschlagteils liegenden arretierenden Einrichtung in seiner entriegelten Stellung gehalten wird, so daß der Drehkeil nach dem Einschieben des anderen Beschlagteils in seine Verriegelungsstellung schnappt. Der mit der Scheibe verbundene Betätigungshebel wird vorher zurückgeschwenkt, so daß er ein Schnappen des Drehkeils in seine Verriegelungsstellung nicht behindern kann.

Nach drei weiteren Vorschlägen wird die gestellte Aufgabe jeweils durch die kennzeichnenden Merkmale der Patentansprüche 7, 10 und 11 gelöst.

Ausführungsbeispiele der Erfindung werden nachstehend anhand der Zeichnung näher erläutert. In dieser zeigt

Fig. 1 eine Seitenansicht des mit dem Drehkeil versehenen Beschlagteils, bei dem eine Gehäusehälfte des in einer vertikalen Mittelebene geteilten Gehäuses entfernt ist,

Fig. 2 einen Horizontalschnitt durch die beiden voneinander entfernten Gehäusehälften längs der Linie II-II in Fig. 1,

Fig. 3 eine Seitenansicht des mit einer Öse für den Drehkeil versehenen Beschlagteils,

Fig. 4 eine Seitenansicht der Drehfeder für den Drehkeil,

Fig. 5 eine Draufsicht auf die den Drehkeil in seiner entriegelten Stellung arretierenden Blattfeder,

Fig. 6 eine Seitenansicht der Blattfeder nach Fig. 5,

Fig. 7 einen Horizontalschnitt durch die Beschlagteile mit in seiner entriegelten Stellung befindlichem Drehkeil,

Fig. 8 eine Draufsicht auf die Beschlagteile nach Fig. 7 mit in der Montagestellung befindlichem Betätigungshebel,

Fig. 9 einen der Fig. 7 entsprechenden Horizontalschnitt nach dem Zusammenschieben der Beschlagteile und mit in seine Verriegelungsstellung geschnapptem Drehkeil,

Fig. 10 eine Draufsicht auf die Beschlagteile nach Fig. 9,

Fig. 11 einen den Fig. 7 und 9 entsprechenden Horizontalschnitt mit durch den verrasteten Betätigungshebel in seiner entriegelten Stellung gehaltenem Drehkeil,

Fig. 12 eine Draufsicht auf die Beschlagteile in der Stellung nach Fig. 11,

Fig. 13 eine Draufsicht auf den Drehkeil,

Fig. 14 eine Unteransicht der mit dem Betätigungshebel versehenen Scheibe,

Fig. 15 eine Seitenansicht der Scheibe nach Fig. 14,

Fig. 16 eine Vorderansicht des mit der Öse versehenen Beschlagteils,

Fig. 17 eine Seitenansicht des den Drehkeil tragenden Schwenkbolzens,

Fig. 18 einen Längsschnitt durch ein Drehkeilgehäuse einer anderen Ausführungsform längs der Linie I-I in Fig. 19,

Fig. 19 einen Horizontalschnitt durch das Drehkeilgehäuse längs der Linie II-II in Fig. 18,

Fig. 20 eine Seitenansicht des aus einem Kopfbolzen bestehenden Beschlagteils,

Fig. 21 eine Draufsicht auf die Drehfeder,

Fig. 22 eine Seitenansicht des Betätigungshebels mit zylindrischen Drehfedergehäuse,

Fig. 23 eine Unteransicht des Betätigungshebels nach Fig. 22,

Fig. 24 eine Seitenansicht des aus zwei scheibenförmigen Elementen bestehenden Drehkeils,

Fig. 25 eine Draufsicht auf den Drehkeil nach Fig. 24,

Fig. 26 eine Seitenansicht eines Betätigungshebels für den Drehkeil mit Drehfedergehäuse und den Drehkeil lagernden Zapfen,

Fig. 27 eine Draufsicht auf den Betätigungshebel nach Fig. 26,

Fig. 28 eine Seitenansicht einer weiteren Ausführungsform eines Drehfedergehäuses mit Betätigungshebel und Zapfen zur Lagerung des Drehkeils,

Fig. 29 eine Unteransicht des Drehfedergehäuses nach Fig. 28,

Fig. 30 und Fig. 31 das mit dem Drehkeil versehene Beschlagteil im Horizontalschnitt und in Draufsicht in seiner Bereitschaftsstellung,

Fig. 32 und Fig. 33 den Fig. 30 und 31 entsprechende Darstellungen, nachdem der mit dem Kopf versehene Bolzen die Verriegelung des Drehkeils gelöst hat und dieser in seine Verriegelungsstellung geschnappt ist,

Fig. 34 und Fig. 35 den Fig. 32 und 33 entsprechende Darstellungen, nachdem der Betätigungshebel zum Zwecke des Lösens der Verriegelung in seiner Öffnungsstellung arretiert worden ist,

Fig. 36 einen Schnitt durch miteinander zu verbindende Möbelteile, von denen in einer Durchgangsbohrung einer senkrechten Möbelwand beidseits zwei Kopfbolzen eingeschraubt sind, an die waagerechte Möbelteile durch Verschieben in und quer zu ihrer Ebene angeschlossen werden,

Fig. 37 einen Schnitt durch zwei miteinander verbundene Möbelteile, bei denen das mit dem Drehkeil versehene Beschlagteil vollständig in eine ausgefräste Bohrung eingelassen ist,

Fig. 38 eine Draufsicht auf die miteinander verbundenen Möbelteile nach Fig. 37,

Fig. 39 einen Schnitt durch zwei miteinander verbundene Möbelteile in der Trennebene des Drehkeilgehäuses einer anderen Ausführungsform,

Fig. 40 einen Horizontalschnitt durch das Drehkeilgehäuse längs der Linie XXIII-XXIII in Fig. 39,

Fig. 41 eine Seitenansicht des den Drehkeil lagernden Bolzens mit Betätigungshebel,

Fig. 42 eine Draufsicht auf den Betätigungshebel nach Fig. 41,

Fig. 43 eine Draufsicht auf die endseitig mit einem Haken versehene Blattfeder,

Fig. 44 eine Seitenansicht der Blattfeder nach Fig. 43,

Fig. 45 eine Seitenansicht des durch die zylindrische Wandung gebildeten Drehkeils,

Fig. 46 eine Draufsicht auf den Drehkeil nach Fig. 45,

Fig. 47 eine Seitenansicht der Drehfeder,

Fig. 48 und Fig. 49 einen Horizontalschnitt und eine Draufsicht auf das mit dem Drehkeil versehene Beschlagteil in seiner Bereitschaftsstellung,

Fig. 50 und 51 eine den Fig. 48 und 49 entsprechende Darstellung in der Verriegelungsstellung,

Fig. 52 und 53 eine den Fig. 50 und 51 entsprechende Darstellung im entriegelten Zustand des Drehkeils,

Fig. 54 und 55 eine Draufsicht und eine Seitenansicht eines in ein Möbelteil eingelassenen Drehkeilgehäuses mit arretierender keilförmiger Rampe für den Betätigungshebel,

Fig. 56 eine Seitenansicht des den Drehkeil lagernden Bolzens mit Betätigungshebel,

Fig. 57 einen Längsschnitt durch eine weitere Ausführungsform eines Beschlagteils längs der Linie A-B in Fig. 58,

Fig. 58 einen Querschnitt durch das Beschlagteil nach Fig. 57 längs der Linie C-D in Fig. 57,

Fig. 59 eine Rückansicht des Schieberteils nach den Fig. 57 und 58 und

Fig. 60 eine Seitenansicht des Schieberteils nach Fig. 59.

Der in der Zeichnung dargestellte Verbindungsbeschlag besteht aus einem mit einer Öse 3 versehenen Beschlagteil 1 und einem den Drehkeil 4 enthaltenden Beschlagteil 2, die mit topfförmigen Gehäusen versehen sind.

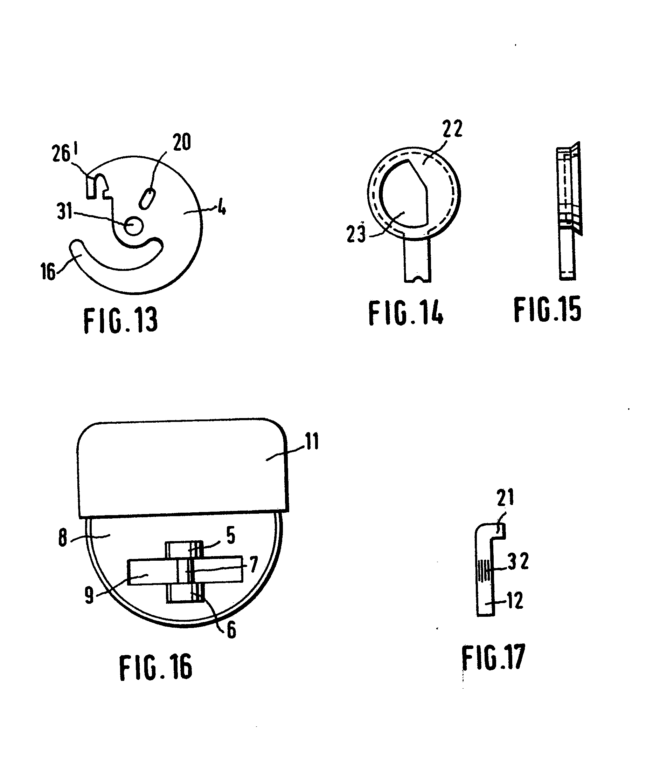

Das Beschlagteil 1 besteht aus zwei im Abstand fluchtend übereinander angeordneten wangenförmigen Teilen 5, 6, die durch einen die Öse 3 bildenden Bolzen 7 miteinander verbunden sind. Die wangenförmigen Teile 5, 6 sind in der aus Fig. 16 ersichtlichen Weise in dem topfförmigen Gehäuse 8 verankert. Der Bolzen 7 übergreift eine kreisabschnittförmige Nut des Gehäuses 8, so daß die durch den Bolzen 7 gebildete Öse 3 behinderungsfrei von dem Drehkeil 4 hintergriffen werden kann.

Das Gehäuse 8 des Beschlagteils 1 ist mit einem eine Stufe 10 bildenden Flansch 11 versehen, wobei die Stufe 10 einen Anschlag zum Einpassen des Beschlagteils 2 schafft.

Der Drehkeil 4 ist drehfest auf dem Bolzen 12 befestigt, der schwenkbar in dem aus den Gehäusehälften 13, 14 bestehenden Gehäuse gelagert ist. Das Gehäuse weist im wesentlichen eine zylinderscheibenförmige Form mit abgeflachter Vorderseite 15 auf. Der Bolzen 12 ist in dem Gehäuse parallel zu dessen Zylinder-Längsachse gelagert. Das Gehäuse weist an seiner abgeflachten Vorderseite 15 eine schlitzförmige Öffnung auf, aus der der in einer horizontalen Durchmesserebene gelagerte Drehkeil 4 mit seinem abgerundeten keilförmigen vorderen Ende 16 heraustreten kann.

Auf den unteren Teil des Bolzens 12 ist eine gewundene Drehfeder 17 aufgeschoben, deren einer Schenkel 18 auf einem gehäusefesten Widerlager abgestützt ist und deren anderer abgewinkelter Schenkel 19 in ein Langloch 20 des scheibenförmigen Drehkeils 4 greift. Das Langloch 20 erlaubt dem abgewinkelten Schenkel 19 bei einem Verschwenken des Drehkeils 4 eine radiale Verschiebung.

Der Bolzen 12 durchsetzt mit seinem oberen Ende die Deckwandung des Gehäuses und trägt einen kurzen, auf der Oberseite des Gehäuses liegenden Hebelarm 21. Dieser Hebelarm 21 ist von einem kreisscheibenförmigen Drehteil 22 überdeckt, das auf seiner Unterseite eine sektorförmige Ausnehmung 23 aufweist, in der der Hebelarm 21 liegt. Das Drehteil 22 ist an seinem unteren Rand mit einem abgeschrägten Kragen 24 versehen, der zur Lagerung des Drehteils in einer hinterschnittenen, entsprechend komplementären Nut der Oberseite des Gehäuses gehaltert ist. Das scheibenförmige Drehteil 22 ist mit einem Betätigungshebel 25 versehen, der in einer sektorförmigen Ausnehmung 26 auf der Oberseite des Gehäuses liegt. Der Sektorwinkel der Aussparung 26 ist mindestens so groß wie der Sektorwinkel der Aussparung 23.

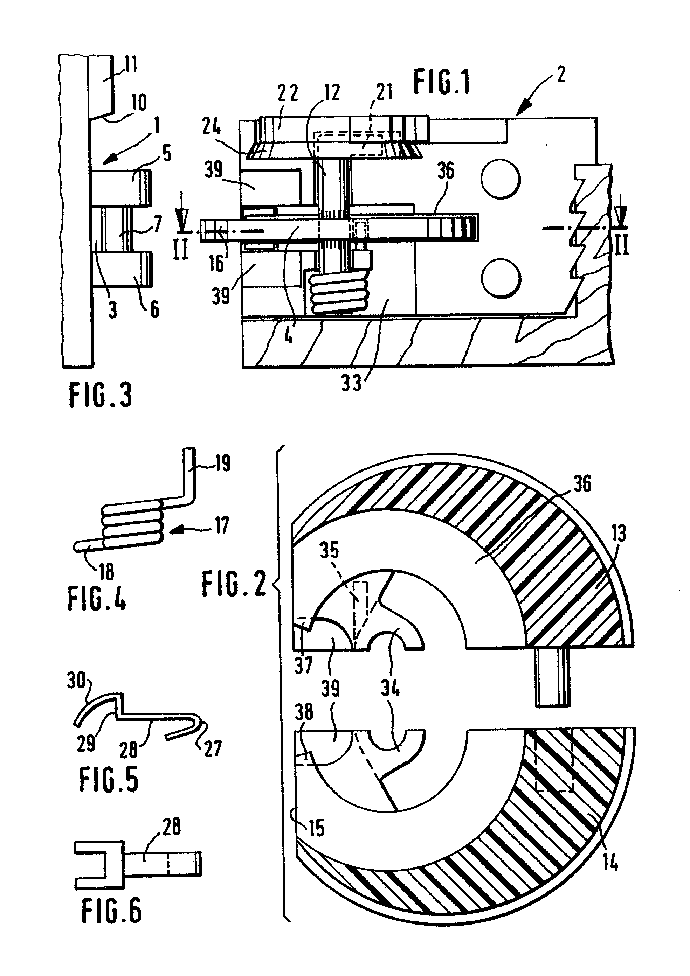

Wie am besten aus Fig. 13 ersichtlich ist, besteht der Drehkeil 4 aus einem scheibenförmigen Körper mit einem kreisbogenförmig gekrümmten keilförmigen Teil 16. In der den keilförmigen Teil freischneidenden Aussparung ist eine Einkerbung 26 vorgesehen, in der das U-förmig gebogene hintere Ende 27 der Blattfeder 28 verankert ist. Von dem geraden Teil der Blattfeder 28 ist zur Bildung eines hakenförmigen Teils 29 ein Schenkel abgewinkelt, von dem wiederum frei auslaufend eine gekrümmte Fahne 30 abgebogen ist. Die verbreiterte Fahne 30 ist in der aus Fig. 6 ersichtlichen Weise gegabelt ausgeführt.

Der kreisscheibenförmige Drehkeil 4 ist mit einer zentralen Bohrung 31 versehen, in der drehfest der mit Riefen 32 versehene Teil des Bolzens 12 gehaltert ist.

Das Gehäuse des Drehkeils 4 ist in der aus Fig. 2 ersichtlichen Weise längs einer mittig durch die abgeflachte Vorderseite 15 verlaufenden axialen Ebene in die Gehäusehälften 13, 14 geteilt. Das Gehäuse weist einen etwa zylindrischen und nach unten offenen Hohlraum 33 auf, in dem etwa zentrisch der Bolzen 12 einerseits auf einem in den Hohlraum ragenden Steg 34 und andererseits in einer in der den Hohlraum schließenden Deckwandung befindlichen Bohrung gelagert ist. Die Lagerbohrungen befinden sich jeweils zur Hälfte in den Gehäusehälften 13, 14, so daß die Montage erleichtert ist. Die Gehäusehälften sind mit Zapfen und entsprechenden Aussparungen zur Verbindung und Zentrierung versehen. Der Schenkel 18 der Drehfeder 17 ist in einem entsprechenden Sackloch 35 der Gehäusehälfte 13 festgelegt.

Der zylindrische Raum 13 ist mit einer kreisförmigen Nut 36 versehen, in der der Drehkeil 4 liegt.

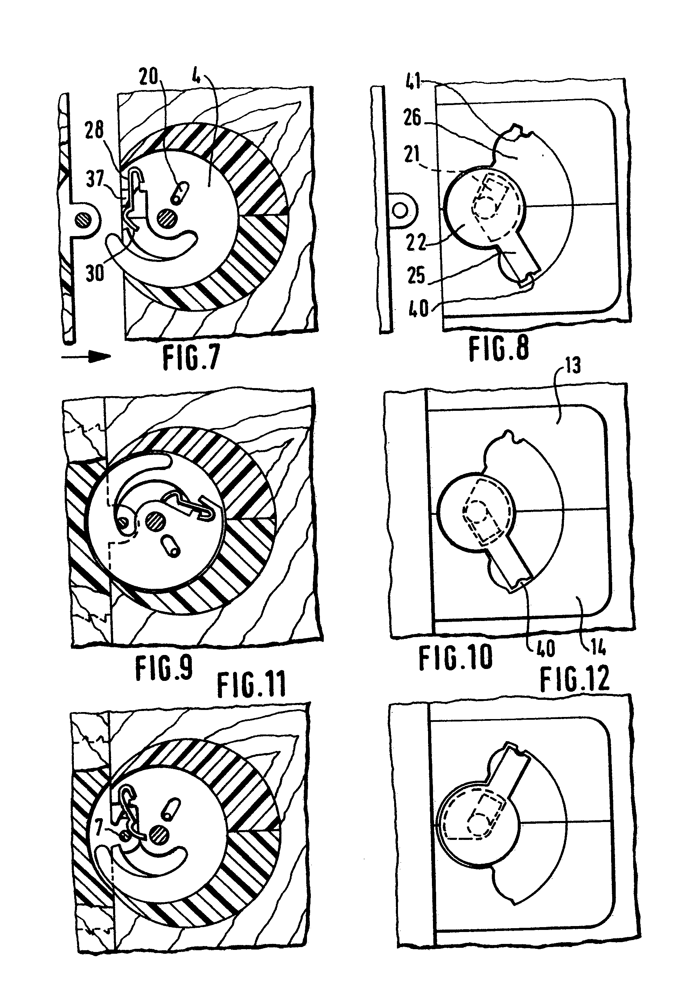

Im Bereich der abgeflachten Vorderseite 15 weist die Wandung des Hohlraums 33 beidseits der Nut 36 die Öffnung begrenzende etwa rechtwinklige Kanten 37, 38 auf, wobei hinter die Kante 37 das hakenförmige Teil 29 der Blattfeder 28 in der aus Fig. 7 ersichtlichen Weise greifen kann, um den Drehkeil 4 in seiner entriegelten Stellung zu arretieren. In dieser Stellung liegt die Fahne 30 der Blattfeder 28 in der Einschuböffnung 39 für das Beschlagteil 1, so daß die Arretierung durch Einschieben des Beschlagteils 1 aufgehoben wird und das hakenförmige Teil 29 frei verschieblich über dem Rand der Nut 36 mit der Ausnehmung 33 gleitet.

Der Betätigungshebel 25 ist in der aus den Fig. 8, 10 und 12 ersichtlichen Weise mit einer Ausnehmung 40 versehen, die in den nockenartigen Vorsprung 41 einrasten kann, die sich auf der Umfangsfläche der sektorartigen Ausnehmung 26 befindet.

Fig. 7 und 8 zeigen die Beschlagteile in ihrer für die Montage vorbereiteten Stellung. Durch den Betätigungshebel 25 ist der Drehkeil 4 zunächst in seine entriegelte Stellung verschwenkt worden, so daß das hakenförmige Teil 29 der Blattfeder 28 hinter den Gehäusevorsprung 37 einfällt und den Drehkeil 4 in seiner aus Fig. 7 ersichtlichen Montagestellung hält. Der Betätigungshebel 25 wird sodann in die aus Fig. 8 ersichtliche Stellung zurückgeschwenkt, so daß der Drehkeil 4 nach dem Einschieben des Beschlagteils 1, der gegen die Fahne 30 der Blattfeder 28 stößt und dadurch die Arretierung löst, in seine aus Fig. 9 ersichtliche Verriegelungsstellung schnappen kann. Da der Hebel 21 sich frei in der sektorartigen Ausnehmung 23 des Drehteils 22 bewegen kann, ist das Schnappen in die Verriegelungsstellung nicht behindert. Die Fahne 30 ist in der aus Fig. 6 ersichtlichen Weise gegabelt ausgeführt, so daß der Drehkeil 4 diese behinderungsfrei durchsetzen kann.

Zum Lösen der Verbindung wird der Betätigungshebel 25 in der aus Fig. 12 ersichtlichen Weise in der Öffnungsstellung dadurch arretiert, daß der Nocken 41 in die Ausnehmung 40 einfällt. In dieser Stellung stützt sich nach Freigabe des Bolzens 7 durch den Drehkeil 4 die Blattfeder 28 mit ihrer Fahne 30 auf der Außenseite des Bolzens 7 ab, so daß die Verbindung behinderungsfrei auseinandergezogen werden kann. Nach dem Auseinanderziehen fällt die Blattfeder 28 mit ihrem hakenförmigen Teil 29 wieder hinter den Gehäusevorsprung 37 ein, so daß der Drehkeil in seiner aus Fig. 7 ersichtlichen Bereitschaftsstellung arretiert ist. Zur erneuten Montage ist es lediglich erforderlich, den Betätigungshebel 25 aus seiner aus Fig. 12 ersichtlichen Stellung in seine aus Fig. 8 ersichtliche Stellung zu verschwenken.

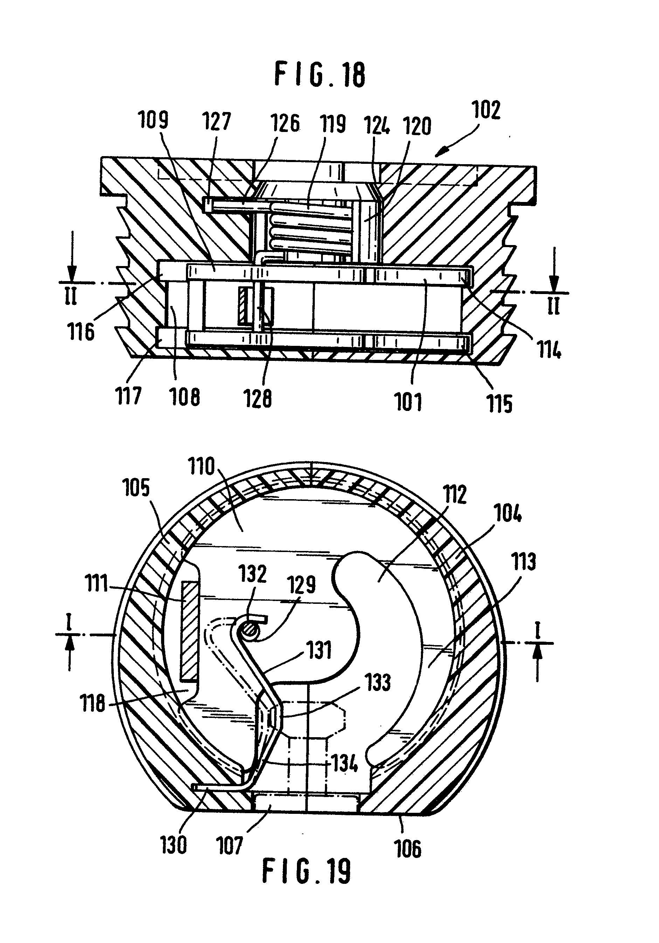

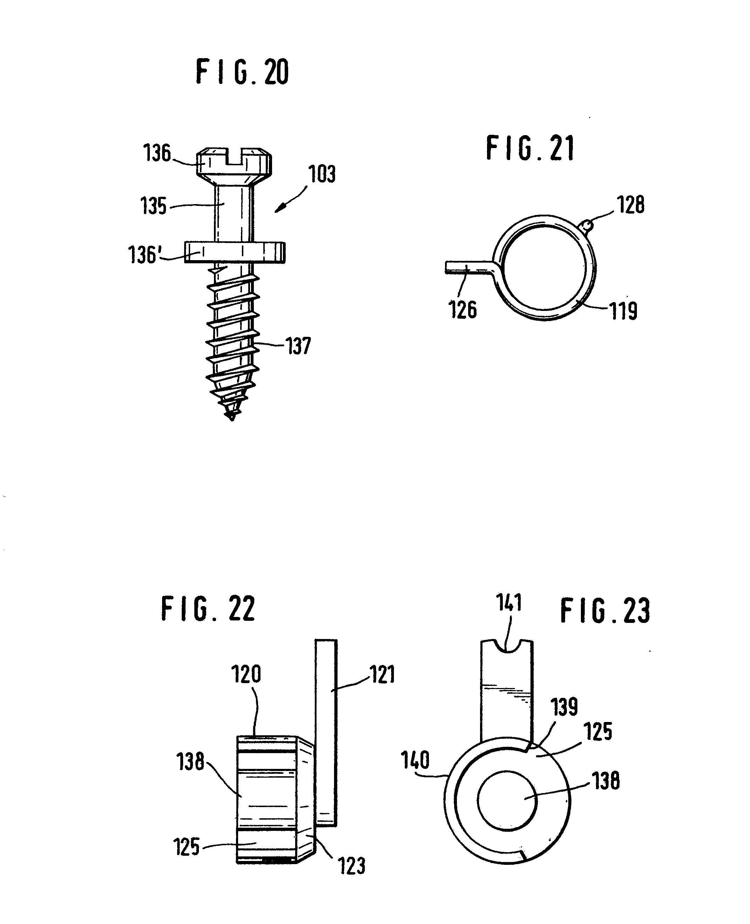

Die in den Fig. 18 bis 23 dargestellte Ausführungsform eines Verbindungsbeschlages besteht aus dem mit dem Drehkeil 101 versehenen Beschlagteil 102 und dem durch den einschraubbaren Kopfbolzen gebildeten Beschlagteil 103.

Der Beschlagteil 102 besteht aus einem mittig geteilten, im wesentlichen zylindrischen Gehäuse, das aus den Gehäusehälften 104, 105 zusammengesetzt ist. Das Gehäuse weist symmetrisch zu seiner Teilungsebene eine vordere Abflachung 106 auf, die mit einer mittigen Einschuböffnung 107 für das Beschlagteil 103 versehen ist. Die Einschuböffnung 107 mündet in einen etwa zylindrischen Hohlraum 108 des Gehäuses, in dem der Drehkeil 101 gelagert ist. Der Drehkeil 101 ist aus einem Blechstanzteil gebogen und besteht aus zwei zueinander parallelen kreisscheibenförmigen Platten 109, 110, die durch einen Steg 111 miteinander verbunden sind. Durch sichelförmige Ausstanzungen sind in den Scheiben 109, 110 Aussparungen 112 geschaffen, durch die aus diesen die kreisbogenförmig gekrümmten Zinken 113 herausgeschnitten sind, die die eigentlichen Drehkeile bilden. Die Scheiben 109, 110 besitzen kreisförmige Ränder 114, 115, die in Ringnuten 116, 117 der Innenwandung des zylindrischen Hohlraums 108 des Gehäuses geführt sind. Der Steg 111 befindet sich in Randaussparungen 118 der Scheiben 109, 110, so daß er den Eingriff der Ränder 114, 115 in die Ringnuten 116, 117 nicht zu behindern vermag.

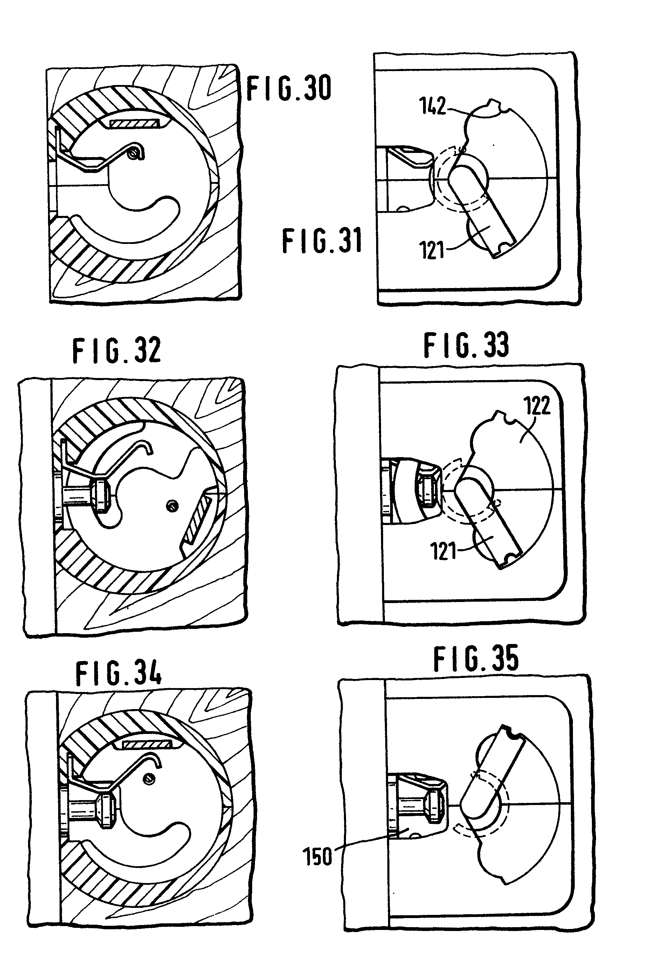

Konzentrisch zur Drehachse des Drehkeils 101 ist auf diesem die gewundene Drehfeder 119 angeordnet, die von einem einen Drehzahpfen bildenden zylindrischen Federgehäuse 120 eingefaßt ist. Rechtwinklig zur Achse des Federgehäuses 120 ist mit dessen Oberseite der Betätigungshebel 121 verbunden, der in einer sektorförmigen Ausnehmung 122 der Gehäuseoberseite liegt, die aus den Fig. 31, 33 und 35 ersichtlich ist.

Das zylindrische, die Feder 119 aufnehmende Federgehäuse 120 ist in einer entsprechenden zylindrischen Ausnehmung des Drehkeilgehäuses gelagert und weist an seinem oberen Rand eine kegelstumpfförmige Abschrägung 123 auf. Diese Abschrägung 123 ist von einem entsprechenden Rand 124 des Gehäuses mit innenkegeligem Profil übergriffen, so daß das Federgehäuse 120 drehbar, aber axial unverschieblich in dem Drehkeilgehäuse gehaltert ist. Das Federgehäuse 120 weist eine sektorartige Wandausnehmung 125 auf, durch die die Schenkel der Drehfeder 119 hindurchgreifen. Die Drehfeder 119 weist einen radialen oder tangentialen oberen Schenkel 126 auf, der in einer Bohrung 127 der Gehäusehälfte 105 gehaltert ist. Der andere Schenkel 128 der Drehfeder 119 ist rechtwinklig abgewinkelt und durchsetzt die Scheiben 109, 110 des Drehkeils 101 in Bohrungen 129.

In einer Aussparung der Gehäusehälfte 105 ist ein Ende 130 einer Blattfeder 131 festgelegt, deren freies Ende durch eine Abbiegung 132 hakenförmig gekrümmt ist. Diese hakenförmige Abbiegung 132 ist derart angeordnet, daß sie in der aus Fig. 19 ersichtlichen Bereitschaftsstellung, in der der keilförmige Zinken 113 aus der Einschuböffnung 107 zurückgezogen ist, auf den einen Stift bildenden Schenkel 128 einhakt.

Der mittlere Bereich 133 der Blattfeder 131 ist in der aus Fig. 19 ersichtlichen Weise abgekröpft oder bogenförmig ausgebildet, so daß er in die Einschuböffnung 107 mit einer schräg verlaufenden Auflauframpe 134 ragt.

Das bolzenförmige Beschlagteil 103 besteht aus einem Schaft 135, der einen verbreiterten, mit einem Schlitz für einen Schraubenzieher versehenen Kopf 136 trägt. An seinem unteren Ende trägt der Schaft 135 einen scheibenförmigen Ringbund 136, der die Einschraubtiefe begrenzt. Auf der gegenüberliegenden Seite des Ringbundes 136 ist der Schaft 135 durch einen mit einem Gewinde versehenen Bolzen 137 fortgesetzt.

Das zylindrische Federgehäuse 120 weist einen zentralen Bolzen 138 auf, der den gewendelten Teil der Drehfeder 119 durchsetzt.

Die untere Kante der vertikalen Stirnseite 139 der Wandung 140 des zylindrischen Federgehäuses 120, die im Bereich des Betätigungshebels 121 liegt, bildet einen Anschlag für die Abwinkelung des Federschenkels 128, so daß durch Verschwenkung des Betätigungshebels 121 der Drehkeil 101 in seine aus Fig. 19 ersichtliche entriegelte Stellung verschwenkt werden kann.

Zur Montage der Möbelteile mittels der Beschlagteile 102, 103 wird der Drehkeil durch den Betätigungshebel 121 in die aus den Fig. 19 und 30 ersichtliche Bereitschaftsstellung verschwenkt, in der die hakenförmige Abbiegung 132 der Blattfeder 131 mit dem vertikalen Schenkel 128 der Drehfeder 119 verhakt. Der Betätigungshebel 121 wird in seine aus Fig. 31 ersichtliche Stellung geschwenkt, so daß er ein Schnappen des Drehkeils in seine Verriegelungsstellung nicht zu behindern vermag. Wird nun der Kopf 136 in die Einschuböffnung 107 des Beschlagteils 102 eingeschoben, läuft er auf den rampenförmig abgeschrägten Teil 134 der Blattfeder 131 in der Weise auf, daß er diese zurückdrückt, bis die Verhakung zwischen dem abgewinkelten Teil 132 und dem Schenkel 128 gelöst ist, so daß der Drehkeil 101 in seine aus Fig. 32 ersichtliche Verriegelungsstellung schnappt. In dieser stützt sich der Kopf 136 auf den Scheitel der Krümmung der Blattfeder 131 ab.

Soll nun die Verriegelung wieder gelöst werden, wird der Betätigungshebel 121 in seine aus Fig. 35 ersichtliche Stellung geschwenkt, in der er mit seiner stirnseitigen Ausnehmung 141 in den Vorsprung 142 einschnappt, der in der Wandung der sektorartigen Ausnehmung 122 vorgesehen ist. In dieser Stellung hat die Kante 139 der Wandung 140 des zylindrischen Federgehäuses 120 die Abwinkelung des Schenkels 128 mitgenommen und dadurch den Drehkeil 101 in seine aus Fig. 34 ersichtliche entriegelte Stellung verschwenkt. Wird nun das Beschlagteil 102 von dem Beschlagteil 103 abgezogen, gibt der Kopf 136 die Blattfeder 131 frei, so daß die hakenförmige Abbiegung 132 wieder hinter den einen Arretierungsstift bildenden Schenkel 128 einfallen kann. Da nun der Drehkeil 101 in seiner Bereitschaftsstellung arretiert ist, kann der Betätigungshebel 121 wieder aus einer aus Fig. 35 ersichtlichen Stellung in seine aus Fig. 31 ersichtliche Stellung zurückverschwenkt werden.

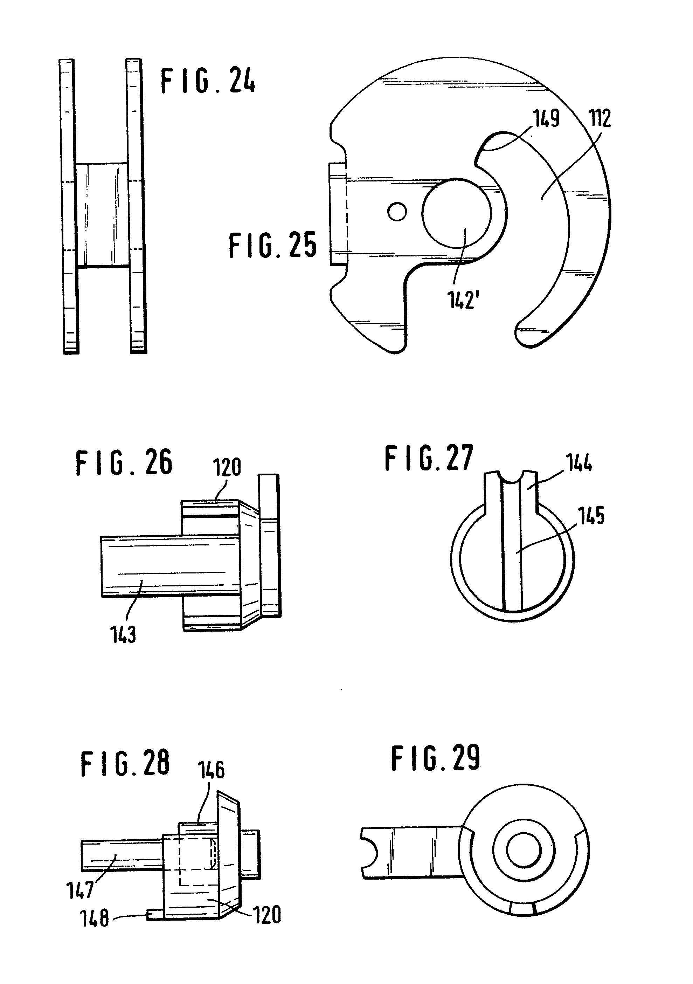

Der aus den Fig. 24 und 25 ersichtliche Drehkeil unterscheidet sich von dem Drehkeil gemäß der Ausführungsform nach den Fig. 18 und 19 nur dadurch, daß er mit einer zentralen Bohrung 142 versehen ist. Mit dieser Bohrung 142 ist der Drehkeil auf dem verlängerten zentralen Zapfen 143 des zylindrischen Federgehäuses 120 für die Drehfeder gelagert. Da der Drehkeil auf dem Zapfen 143 gelagert ist, kann auf Führungsnuten in dem zylindrischen Hohlraum des Drehkeilgehäuses verzichtet werden, so daß sich die kreisbogenförmigen Ränder des Drehkeils unmittelbar auf den Wandungen des zylindrischen Hohlraums abstützen können.

Bei der Ausführungsform nach den Fig. 26 und 27 ist nur ein kurzer, der Verrastung dienender Betätigungshebel 144 vorgesehen, so daß die Drehung des Federgehäuses 120 mit einem Schraubenzieher vorgenommen werden kann, der in einen Schlitz 145 auf der Oberseite des Federgehäuses 120 eingreifen kann.

Bei der Ausführungsform nach den Fig. 28 und 29 ist der zentrale Zapfen abgesetzt und weist einen im Durchmesser größeren Teil 146 auf, mit dem er die Drehfeder durchsetzt, und einen dünneren Teil 147, auf dem der Drehkeil gelagert ist. Auf dem äußeren Rand der Wandung des Federgehäuses 120 ist ein Zahn 148 vorgesehen, der in den Grund 149 der Aussparung 112 des Drehkeils greift, um diesen in seine entriegelte Stellung bei einem Verschwenken des Betätigungshebels mitzunehmen.

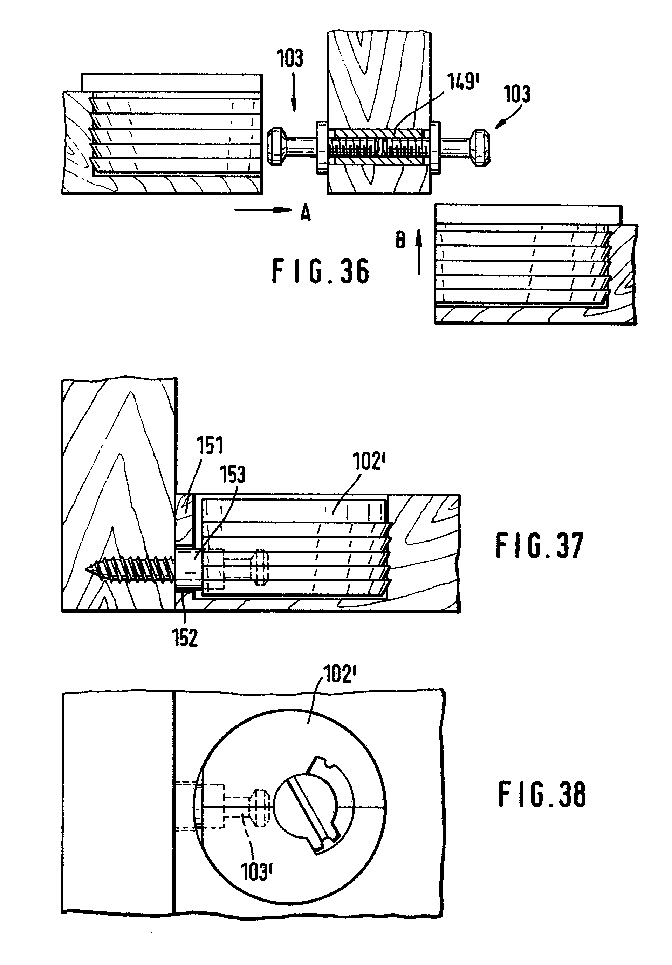

Bei der Ausführungsform nach Fig. 36 ist in eine Durchgangsbohrung einer vertikalen Möbelwand eine Hülse 149 eingesetzt, in die von beiden Seiten her mit metrischen Gewinden versehene Beschlagteile 103 eingeschraubt sind. Da die Beschlagteile 102 in der aus den Fig. 31, 33, 35 ersichtlichen Weise mit deren Oberseiten durchsetzenden Aussparungen 150 versehen sind, können die waagerechten Möbelteile sowohl durch Verschiebung in ihrer Ebene in Richtung des Pfeils A als auch durch Verschiebung quer zu ihrer Ebene in Richtung des Pfeils B mit den Beschlagteilen 103 verriegelt werden.

Bei der Ausführungsform nach den Fig. 37 und 38 ist das mit dem Drehkeil versehene Beschlagteil 102' etwa zylindrisch ausgebildet und vollständig in eine gefräste hohlzylindrische Ausnehmung des Möbelteils eingelassen. Der Steg 151 zwischen der Bohrung und der Stirnseite des Möbelteils ist mit einer Bohrung 152 versehen, die mit der Einschuböffnung in dem Beschlagteil 102' fluchtet. Durch die Bohrung 152 und die Einschuböffnung läßt sich das Beschlagteil 102' sodann auf das Beschlagteil 103' aufschieben. Das Beschlagteil 103' ist mit einem im Durchmesser stärkeren Teil 153 versehen, mit dem dieser die Bohrung 152 und die Einschuböffnung 107 durchsetzt.

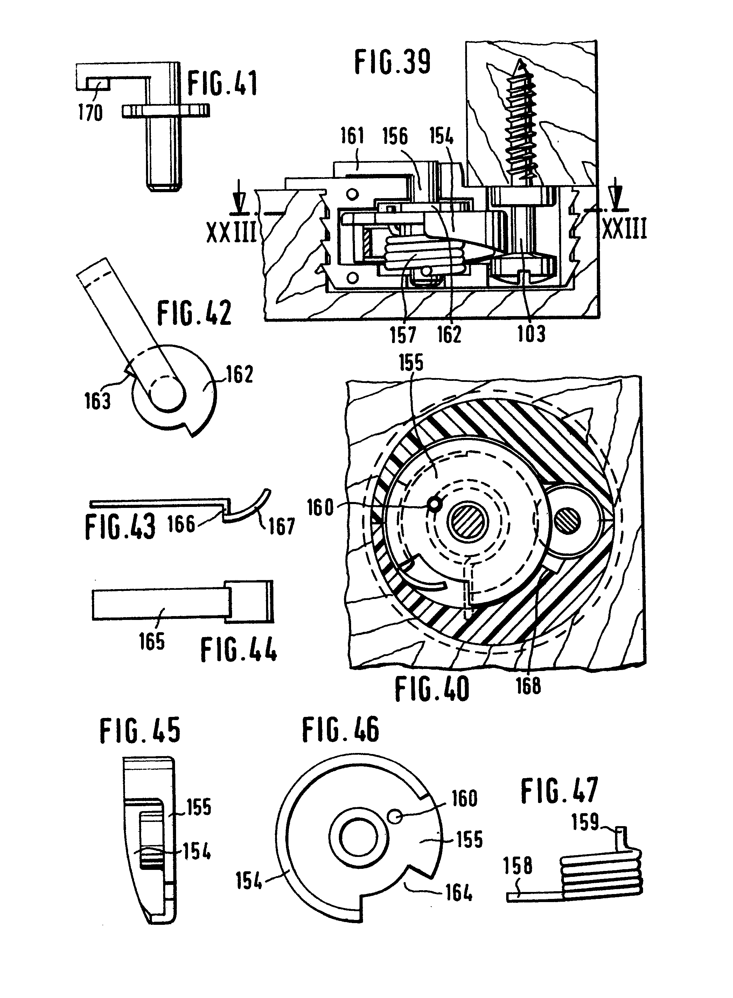

Bei der Ausführungsform des Verbindungsbeschlags nach den Fig. 39 bis 56 besteht der Drehkeil aus der sich keilförmig erhöhenden zylindrischen Wandung 154 der Drehscheibe 155. Die Drehscheibe 155 ist in dem Drehkeilgehäuse auf einem vertikalen Zapfen 156 frei drehbar gelagert. Auf den Zapfen 156 ist der gewendelte Teil der Drehfeder 157 aufgeschoben, deren einer Schenkel 158 in eine Ausnehmung des Gehäuses und deren anderer rechtwinkelig abgewinkelter Schenkel 159 in einer Bohrung 160 der Drehscheibe 155 festgelegt ist. Der Zapfen 156 ist mit einem auf der Gehäuseoberseite liegenden Betätigungshebel 161 und unterhalb der Gehäuseoberwandung mit einem scheibenförmigen Teil 162 verbunden, das einen radialen Anschlag 163 aufweist, der mit dem die Bohrung 160 durchsetzenden abgewinkelten Schenkel 159 der Drehfeder 157 zusammenwirkt. Die Drehscheibe 155 ist mit einem sektorartigen Ausschnitt 164 versehen, an dessen einem Rand der niedrigste Bereich des durch die Wandung 154 gebildeten Drehkeils anschließt.

In der Gehäuseoberseite ist eine zu dem Zapfen 156 parallele Einschuböffnung für das Beschlagteil 103 vorgesehen.

Mit der Wandung 154 der Scheibe 155 ist eine Blattfeder 165 verbunden, deren freies Ende durch eine Abwinkelung einen Haken 166 bildet. Der Haken 166 ist durch eine gekrümmte, frei auslaufende Fahne 167 fortgesetzt. In der Bereitschaftsstellung fällt der Haken 166 hinter einen neben der Einschuböffnung vorgesehenen stufenförmigen Anschlag 168 ein, wobei der sektorförmige Ausschnitt 164 der Scheibe 155 im Bereich der Einschuböffnung liegt, so daß in diese lediglich die den Haken 166 fortsetzende Fahne 167 ragt.

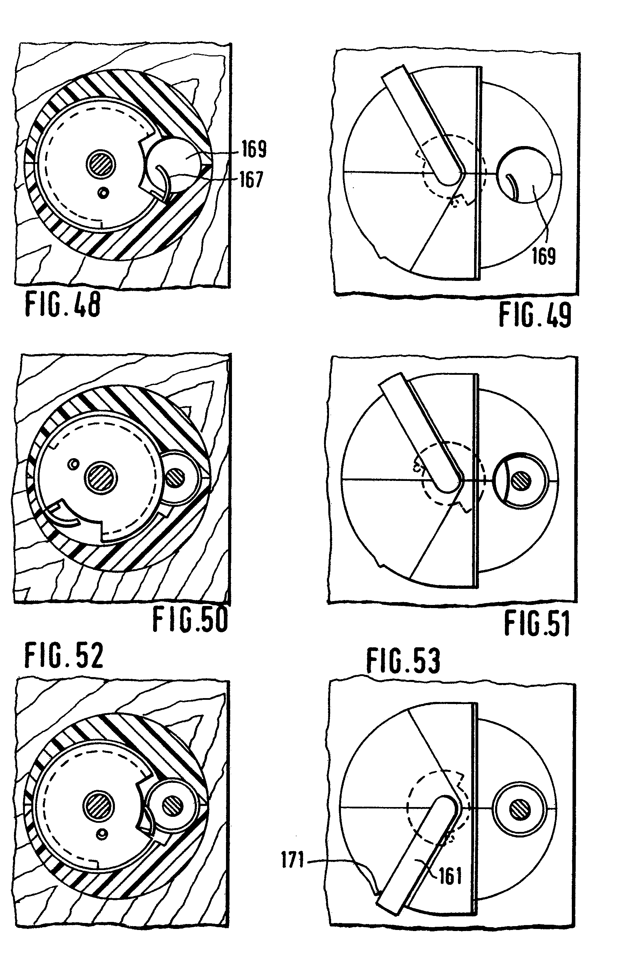

Die Bereitschaftsstellung des mit dem Drehkeil versehenen Beschlagteils ist den Fig. 48 und 49 ersichtlich. Wird das Beschlagteil 103 in die Einschuböffnung 169 eingeschoben, stößt der Kopf des Beschlagteils gegen die Fahne 167 und drückt diese in der Weise in radialer Richtung zurück, daß die Verhakung gelöst und die Drehfeder den Drehkeil in die aus den Fig. 50 und 51 ersichtliche Verriegelungsstellung schnappen läßt, in der der Drehkeil in der aus Fig. 39 ersichtlichen Weise den Kopf des Beschlagteils 103 blockierend hintergreift.

Zum Lösen der Verriegelung wird der Betätigungshebel 161 in die aus Fig. 53 ersichtliche Stellung verschwenkt, in der dessen abgewinkelter, den Gehäuserand übergreifender Teil 170 hinter den Vorsprung 171 am Gehäuserand einschnappt. In dieser Stellung hat der Anschlag 163 des scheibenförmigen Teils 162 den Schenkel 159 und damit die Scheibe 155 mit dem Drehkeil in die aus Fig. 52 ersichtliche entriegelte Stellung verschwenkt. Wird nun das mit dem Drehkeil versehene Beschlagteil von dem Beschlagteil 103 abgezogen, schnappt der Haken 166 der Blattfeder wieder hinter den stufenförmigen Anschlag 168 ein und arretiert den Drehkeil in der aus Fig. 31 ersichtlichen Bereitschaftsstellung. Zur erneuten Montage wird nun der Betätigungshebel 161 über den einen Nocken bildenden Vorsprung 171 zurückgedrückt.

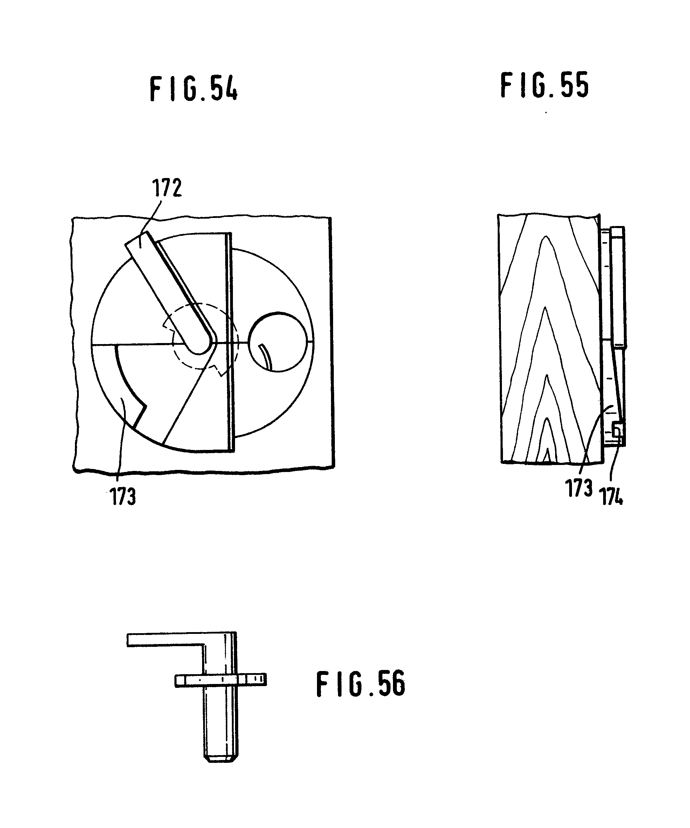

Bei der Ausführungsform nach den Fig. 54 bis 56 ist auf der sektorförmigen Vertiefung der Gehäuseoberseite für den Betätigungshebel 172 eine keilförmig ansteigende Rampe 173 vorgesehen, hinter deren stufenförmigen Absatz 174 der aufgefederte Betätigungshebel 172 nach der Entriegelung einfällt. Zum erneuten Verbringen des Beschlagteils in die Bereitschaftsstellung muß der Betätigungshebel 172 durch federndes Anheben über die Stufe 174 der Rampe 173 hinweggehoben werden.

Die Gehäuse sowie die Betätigungshebel bestehen aus Kunststoff, so daß die Betätigungshebel zu ihrer Arretierung während der Entriegelung elastisch verformt werden können.

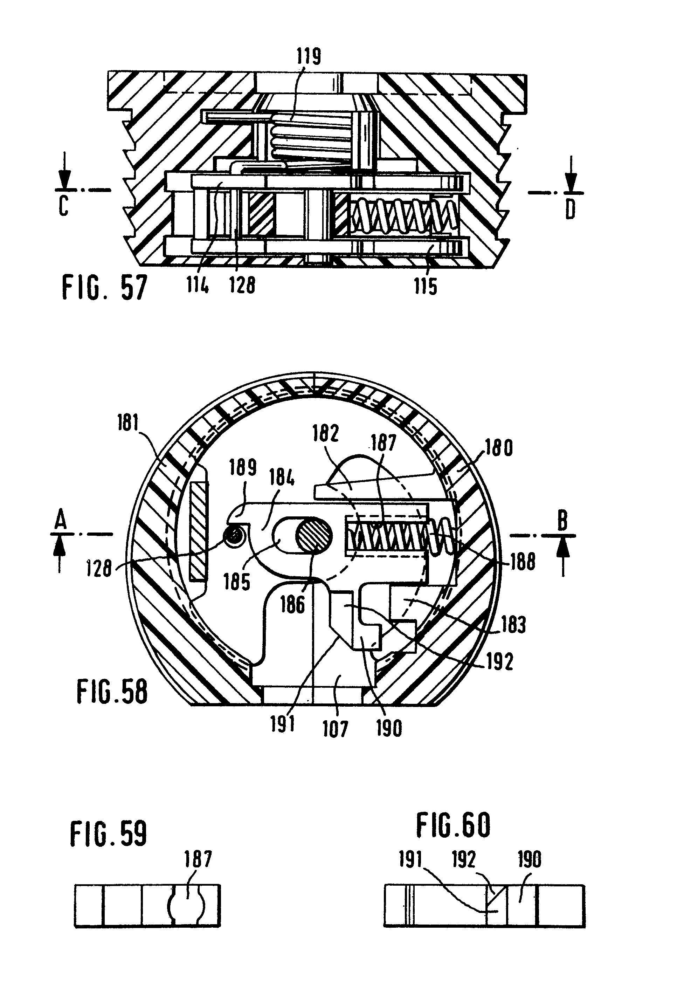

Bei dem Ausführungsbeispiel nach den Fig. 57 bis 60 ist die Seitenwand der Gehäusehälfte 180 des aus den Hälften 180 und 181 bestehenden Gehäuses mit zwei leistenförmigen Fortsätzen 182, 183 versehen, die zueinander parallel verlaufende Innenseiten aufweisen, die eine Führung für den zwischen diesen gehaltenen Schieber 184 bilden. Der Schieber 184 ist mit einem Langloch 185 versehen, das von der Drehachse 186 der beiden in dem Gehäuse drehbar gelagerten Drehkeilscheiben 114, 115 durchsetzt wird. Abgesehen von dem Schieber 184 und dessen Führungseinrichtungen entspricht das Beschlagteil nach den Fig. 57 und 58 in seinem Aufbau einschließlich der Anordnung der Drehfeder 119 dem Beschlagteil nach den Fig. 18 und 19.

Der zwischen den Fortsätzen 182 und 183 geführte rechteckige Teil des Schiebers 184 ist mit einer länglichen Ausnehmung 187 versehen, in der eine Druckfeder 188 gehaltert ist, die sich einerseits auf den Grund der Ausnehmung und andererseits auf die Gehäusewandung der Gehäusehälfte 180 abstützt. Das vordere Ende des Schiebers 184 ist mit einem nasenartigen Vorsprung 189 versehen, der einen Anschlag für den Abgewinkelten Schenkel 128 der Feder 119 bildet und somit den Drehkeil in der dargestellten Bereitschaftsstellung sichert.

In die Einschuböffnung 107 für das Gegenbeschlagteil ragt ein Fortsatz 190 des Schiebers 184, der in jeder der einander rechtwinkelig kreuzenden Einschubrichtungen mit keilförmigen Abschrägungen 191 und 192 versehen ist. Wird also das Gegenbeschlagteil in die Einschuböffnung 107 eingeschoben, gleiten die Schrägflächen 191 oder 192 auf diesem in der Weise ab, daß der Schieber 184 zurückgedrängt wird und dessen Nase 189 den Federschenkel 128 freigibt. Nach dieser Freigabe kann der Drehkeil in seine Verriegelungsstellung schnappen.

## Patentansprüche

1. Verbindungsbeschlag zum lösbaren Verbinden zweier winkelig, vorzugsweise rechtwinkelig aufeinanderstoßender plattenförmiger Möbelteile, bestehend aus zwei jeweils an einem der zu verbindenden Möbelteile befestigbaren Beschlagteilen (1, 2), von denen der eine (1) mit einem hintergreifbaren Vorsprung (5, 6, 7) in eine Ausnehmung (39) des anderen (2) bis zum Anschlag der Beschlagteile (1, 2) und/oder Möbelteile aufeinander einschiebbar ist und der andere (2) zur Verriegelung der Beschlagteile (1, 2) miteinander mit einem den Vorsprung (5, 6, 7) hakenförmig hintergreifenden, federbelasteten, in einem Gehäuse (13, 14) gelagerten Drehkeil (4) versehen ist, wobei eine Halteeinrichtung vorgesehen ist, die den Drehkeil in seiner entriegelten Stellung hält und ihn beim Einschieben in den Vorsprung freigibt, so daß der Drehkeil in seine Verriegelungsstellung schnappt, dadurch gekennzeichnet, daß die Halteeinrichtung aus einem mit dem Drehkeil (4) verbundenen federnden Teil (28) besteht, das sich in der entriegelten Stellung in den Eingangsbereich der Ausnehmung (39) erstreckt und mit einem gehäusefesten Teil (37) verrastet ist, und daß eine Betätigungseinrichtung (21, 22) zum Drehen des Drehkeils (4) in Entriegelungsdrehrichtung vorgesehen ist.

2. Verbindungsbeschlag nach Anspruch 1, dadurch gekennzeichnet, daß die Betätigungseinrichtung zum Entriegeln des Drehkeils (4) aus einem rechtwinkelig an einem den Drehkeil (4) lagernden Bolzen (12) befestigten und auf der Oberseite der Deckplatte des Gehäuses (13, 14) liegenden Hebel (21) besteht.

3. Verbindungsbeschlag nach Anspruch 2, dadurch gekennzeichnet, daß in der Deckplatte des Gehäuses (13, 14) konzentrisch zu der Bolzenachse eine mit einem Betätigungshebel (25) versehene Scheibe (22) schwenkbar gelagert ist, die mit einer sektorförmigen Ausnehmung (23) versehen ist, mit der diese den an dem Bolzen (12) befestigten Hebel (21) übergreift.

4. Verbindungsbeschlag nach Anspruch 3, dadurch gekennzeichnet, daß zur Lagerung der Scheibe (22) diese einen abgeschrägten Rand (24) und die Deckplatte eine dem Rand (24) entsprechend komplementär hinterschnittene Nut zur Aufnahme des Randes aufweist, daß der mit der Scheibe (22) verbundene Betätigungshebel (25) in einer sektorartigen Ausnehmung (26) der Deckplatte des Gehäuses (13, 14) eingelassen ist und daß der Betätigungshebel (25) an seiner endseitigen Stirnseite mit einer Ausnehmung (40) versehen ist, in die in der entriegelten Stellung des Drehkeils (4) ein vorspringender Nokken (41) eingreift, der an dem Umfangsrand der sektorförmigen Ausnehmung (26) vorgesehen ist.

5. Verbindungsbeschlag nach einem der vorhergehenden Ansprüche, dadurch gekennzeichnet, daß das federnde Teil aus einer Blattfeder (28) besteht, deren Verbindung mit dem Drehkeil (4) an ihrem einen Ende (27) vorgenommen ist und die an ihrem anderen Ende einen hakenförmig ausgestalteten Bereich (29) für die Verrastung am Gehäuse und für die Erstreckung in den Eingangsbereich der Ausnehmung (39) eine nach außen weisende Fahne (30) aufweist, wobei für die Verrastung einer der zur Ausnehmung (39) vorstehenden Gehäuseteile (37, 38) vorgesehen ist.

6. Verbindungsbeschlag nach Anspruch 5, dadurch gekennzeichnet, daß das die Fahne (30) bildende Teil der Blattfeder (28) gegabelt ausgebildet ist.

7. Verbindungsbeschlag zum lösbaren Verbinden zweier winkelig, vorzugsweise rechtwinkelig, aufeinanderstoßender plattenförmiger Möbelteile, bestehend aus zwei jeweils an einem der zu verbindenden Möbelteile befestigbaren Beschlagteilen (102, 103), von denen der eine (103) mit einem hintergreifbaren Vorsprung (136) in eine Ausnehmung (107) des anderen (102) bis zum Anschlag der Beschlagteile (102, 103) und/oder Möbelteile aufeinander einschiebbar ist und der andere (102) zur Verriegelung der Beschlagteile (102, 103) miteinander mit einem den Vorsprung (136) hakenförmig hintergreifenden, federbelasteten, in einem Gehäuse (104, 105) gelagerten Drehkeil (101) versehen ist, wobei eine Halteeinrichtung vorgesehen ist, die den Drehkeil in seiner entriegelten Stellung hält und ihn beim Einschieben in den Vorsprung freigibt, so daß der Drehkeil in seine Verriegelungsstellung schnappt, dadurch gekennzeichnet, daß die Halteeinrichtung aus einer mit ihrem hinteren Ende (130) im Gehäuse (104, 105) befestigten Blattfeder (131) besteht, die ein mit einer hakenförmigen Abbiegung (132) versehenes freies vorderes Ende und ein im entriegelten Zustand in dem Einschubbereich der Ausnehmung liegendes Auslöseteil (133) aufweist, daß der Drehkeil (101) zur Verhakung mit der hakenförmigen Abbiegung (132) mit einem Stift oder dergleichen (128) versehen ist, wodurch das Auslöseteil (133) beim Einschieben des Vorsprungs (103) die Verhakung löst, so daß der Drehkeil (101) in seine Verriegelungsstellung schnappt, und daß eine Betätigungseinrichtung (121, 145) zum Drehen des Drehkeils in Entriegelungsdrehrichtung vorgesehen ist.

8. Verbindungsbeschlag nach Anspruch 7, dadurch gekennzeichnet, daß eine den Drehkeil (101) in Verriegelungsrichtung beaufschlagende gewundene Drehfeder (119) vorgesehen und der Stift durch den abgewinkelten Schenkel (128) der Drehfeder (119) gebildet ist, der den Drehkeil (101) in einer Bohrung (129) durchsetzt.

9. Verbindungsbeschlag nach Anspruch 7 oder 8, dadurch gekennzeichnet, daß das Auslöseteil durch den mittleren Bereich (133) der Blattfeder (131) gebildet ist, der zur Bildung eines rampenförmigen Auflaufbereichs (134) für den Vorsprung (136) gekrümmt oder doppelt abgewinkelt ist.

10. Verbindungsbeschlag zum lösbaren Verbinden zweier winkelig, vorzugsweise rechtwinkelig, aufeinanderstoßender plattenförmiger Möbelteile, bestehend aus zwei jeweils an einem der zu verbindenden Möbelteile befestigbaren Beschlagteilen, von den der eine mit einem hintergreifbaren Vorsprung in eine Ausnehmung des anderen bis zum Anschlag der Beschlagteile und/oder Möbelteile aufeinander einschiebbar ist und der andere zur Verriegelung der Beschlagteile miteinander mit einem den Vorsprung hintergreifenden, federbelasteten, in einem Gehäuse gelagerten Drehkeil versehen ist, wobei eine Halteeinrichtung vorgesehen ist, die den Drehkeil in seiner entriegelten Stellung hält und ihn beim Einschieben in den Vorsprung freigibt, so daß der Drehkeil in seine Verriegelungsstellung schnappt, dadurch gekennzeichnet, daß der Drehkeil durch eine in ihrer Höhe keilförmig zunehmende zylindrische Wandung (154) gebildet ist, die auf einer Scheibe (155) ausgebildet ist und vor dem vorderen Keilende in einem Bereich unterbrochen ist, der in der entriegelten Stellung in der Ausnehmung liegt, daß die Halteeinrichtung aus einer mit dem Drehkeil verbundenen Blattfeder (165) besteht, die ein zu einem Haken (166) gebogenes freies vorderes Ende, das eine Verhakung des in seine entriegelte Stellung geschwenkten Drehkeils mit dem Gehäuse bewirkt und mit einer mit dem Haken (166) verbundenen, in die Ausnehmung ragenden Fahne (167) versehen ist, die beim Einschieben des Vorsprungs die Verhakung löst, aufweist, daß das Gehäuse seitlich der Ausnehmung mit einer Stufe (168), hinter die der Haken (166) in der Bereitschaftsstellung greift, versehen ist, und daß eine Betätigungseinrichtung (161, 172) zum Drehen des Drehkeils in Entriegelungsdrehrichtung vorgesehen ist (Fig. 39—56).

11. Verbindungsbeschlag zum lösbaren Verbinden zweier winkelig, vorzugsweise rechtwinkelig, aufeinanderstoßender plattenförmiger Möbelteile, bestehend aus zwei jeweils an einem der zu verbindenden Möbelteile befestigbaren Beschlagteilen, von denen der eine mit einem hintergreifbaren Vorsprung in eine Ausnehmung des anderen bis zum Anschlag der Beschlagteile und/oder Möbelteile aufeinander einschiebbar ist und der andere zur Verriegelung der Beschlagteile miteinander mit einem den Vorsprung hakenförmig hintergreifenden, federbelasteten, in einem Gehäuse (180, 181) gelagerten Drehkeil (114, 115) versehen ist, wobei eine Halteeinrichtung vorgesehen ist, die den Drehkeil in seiner entriegelten Stellung hält und ihn beim Einschieben in den Vorsprung freigibt, so daß der Drehkeil in seine Verriegelungsstellung schnappt, dadurch gekennzeichnet, daß in dem Gehäuse (180, 181) in einer zu dem Drehkeil (114, 115) parallelen Ebene ein gegen die Kraft einer Feder (188) zurückdrängbarer Schieber (184) geführt ist, der mit einem den Drehkeil in seiner aus der Einschuböffnung (107) zurückgeschwenkten Bereitsschaftsstellung arretierenden Anschlag (189) und zur Lösung der Arretierung mit einer in der Einschuböffnung (107) liegenden und von dem anderen Beschlagteil zurückdrängbaren Schrägfläche (192) versehen ist, und daß eine Betätigungseinrichtung zum Drehen des Drehkeils in Entriegelungsdrehrichtung vorgesehen ist (Fig. 57—60).

**Claims**

1. A connection fixture for detachably connecting two plate-shaped furniture parts, which extend at an angle, preferably at right angle, to each other into engagement with each other, consisting of two fixture parts (1, 2), which are adapted to be secured to respective ones of the furniture parts to be connected, wherein one (1) of said fixture parts being provided with an interengageable projection (5, 6, 7), which is adapted to be slidably inserted into an opening (39) of the other fixture part (2) until the fixture parts (1, 2) and/or furniture parts engage each other, the other fixture part (2) is provided with a spring-loaded rotary wedge (4), which is movably mounted in a housing (13, 14) and interengages with the projection (5, 6, 7) in hook shape and serves to cause the fixture parts (1, 2) to interlock, and retaining means are provided, which retain the rotary wedge in its non-locking position and effect a release of the rotary wedge as it is slidably inserted into the projection so that the rotary wedge then snaps to its locking position, characterized in that the retaining means consist of a resilient part (28), which is connected to the rotary wedge (4) and in the non-locking position extends into the entrance region of the opening (39) and is releasably locked to a member (37), which is fixex to the housing, and actuating means (21, 22) are provided for rotating the rotary wedge (4) in an unlocking sense.

2. A connecting fixture according to claim 1, characterized in that the actuating means for unlocking the rotary wedge (4) consist of a lever (21), which lies on the top of the cover plate of the housing (13, 14) and which extends at right angle to and is secured to a pin (12), on which the rotary wedge (4) is movably mounted.

3. A connecting fixture according to claim 2, characterized in that a disc (22), which is concentric to the axis of the bolt is pivoted in the cover plate of the housing (13, 14) and is provided with an actuating lever (25) and formed with a sector-shaped opening (23), which extends over the lever (21) that is secured to the pin (12).

4. A connecting fixture according to claim 3, characterized in that the disc (22) is movably mounted in that it is provided with a bevelled rim (24) and the cover plate is formed with an undercut groove, which is complementary to and accommodates the rim (24), the actuating lever (25) connected to the disc (22) is received by a sector-shaped opening (26) of the cover plate of the housing (13, 14), and the actuating lever (25) is provided at its outer end face with an opening (40) for receiving in the non-locking position of the rotary wedge (4) a protruding cam (41) provided on the peripheral edge of the sector-shaped opening (26).

5. A connecting fixture according to any of the preceding claims, characterized in that the resilient part consists of a leaf spring (28), which is connected at one end (27) to the rotary wedge (4) and which has at its other end a hook-shaped portion (29) for releasably locking to the housing, said leaf spring comprises also an outwardly directed tab (30) for extending into the entrance region of the opening (39), and one of the housing portions (37, 38) protruding toward the opening (39) is provided for the releasable locking.

6. A connection fixture according to claim 5, characterized in that that portion of the leaf spring (28) which constitutes the tab (30) is forked.

7. A connecting fixture for detachably connecting two plate-shaped furniture parts, which extend at an angle, preferably at right angle, to each other into engagement with each other, consisting of two fixture parts (102, 103), which are adapted to be secured to respective ones of the furniture parts to be connected, wherein one (103) of said fixture parts is provided with an interengageable projection (136), which is adapted to be slidably inserted into an opening (107) of the other fixture part until the fixture parts (102, 103) and/or the furniture parts engage each other, the other fixture part (102) is provided with a springloaded rotary wedge (101), which is movably mounted in a housing (104, 105) and interengages with the projection (136) in hook shape in order to cause the fixture parts (102, 103) to interlock, and retaining means are provided, which retain the rotary wedge in its nonlocking position and effect a release of the rotary wedge as it is slidably inserted into the projection so that the rotary wedge then snaps to its locking position, characterized in that the retaining means consist of a leaf spring (131), which at its rear end (130) is secured in the housing (104, 105) and which comprises a free forward end, that is provided with a hook-shaped bend (132), and also comprises a releasing portion (133), which in the nonlocking state lies in the entrance region of the opening, the rotary wedge (101) is provided with a pin or the like (128) for hooklike engagement with the hook-shaped bend (132) so that the releasing portion (133) eliminates the hooklike engagement as the projection (103) is slidably inserted and the rotary wedge (101) then snaps to its locking position, and actuating means (121, 145) are provided for rotating the rotary wedge in an unlocking sense.

8. A connecting fixture according to claim 7, characterized in that a coiled torsion spring (119) is provided, which biases the rotary wedge (101) in a locking sense, and the pin is constituted by the angled leg (128) of the torsion spring (119), which leg extends through the rotary wedge (101), in a bore (129).

9. A connecting fixture according to claim 7 or 8, characterized in that the releasing portion is constituted by the intermediate portion (133) of the leaf spring (131) and said intermediate portion is curved or double-angled to form a ramplike run-up portion (134) for the projection (136).

10. A connecting fixture for detachably connecting two plate-shaped furniture parts, which extend at an angle, preferably at right angle, to each other into engagement with each other, consisting of two fixture parts, which are adapted to be secured to respective ones of the furniture parts to be connected, wherein one of said fixture parts is provided with an interengageable projection, which is adapted to be slidably inserted into an opening of the other fixture part until the fixture parts and/or the furniture parts engage each other, the other fixture part is provided with a spring-loaded rotary wedge, which is movably mounted in a housing and interengages with the projection in hook shape in order to cause the fixture parts to interlock, and retaining means are provided, which retain the rotary wedge in its non-locking position and effect a release of the rotary wedge as it is slidably inserted into the projection so that the rotary wedge then snaps to its locking position, characterized in that the rotary wedge is constituted by a cylindrical wall (154), which increases in height in wedge shape and is formed on a disc (155) and before the forward end of the wedge is interrupted in a portion which in the nonlocking position lies in the opening, the retaining means consist of a leaf spring (165), which is conected to the rotary wedge and comprises a free forward end, which has been bent to form a hook (166) and effects a hooklike engagement between the rotary wedge and the housing when the rotary wedge has been pivotally moved to its non-locking position, the leaf spring is provided with a tab (167), which is connected to the hook (166) and protrudes into the opening and eliminates the hooklike engagement as the projection is slidably inserted, the housing is provided laterally of the opening with a step (168), with which the hook (166) interengages in the position of readiness, and actuating means (161, 172) are provided for rotating the rotary wedge in an unlocking sense (Figures 39 to 56).

11. A connecting fixture for detachably connecting two plate-shaped furniture parts, which extend at an angle, preferably at right angle, to each other into engagement with each other, consisting of two fixture parts, which are adapted to be secured to respective ones of the furniture parts to be connected, wherein one of said fixture parts is provided with an interengageable projection, which is adapted to be slidably inserted into an opening of the other fixture part until the fixture parts and/or the furniture parts engage each other, the other fixture part is provided with a spring-loaded rotary wedge (114, 115), which is movably mounted in a housing (180, 181) and interengages with the projection in hook shape in order to cause the fixture parts to interlock, and retaining means are provided which retain the rotary wedge in its non-locking position and effect a release of the rotary wedge as it is slidably inserted into the projection so that the rotary wedge then snaps to its locking position, characterized in that a slider (184) is guided in the housing (180, 181) in a plane that is parallel to the rotary wedge (114, 115), said slider is adapted to be forced back against the force of a spring (188) and is provided with a stop (189) for locking the rotary wedge in a position of readiness, to which the rotary wedge has been swung back from the receiving opening (107), said slider is provided with a bevelled surface (192), which serves to eliminate the locking engagement and is disposed in the receiving opening and adapted to be forced back by the other fixture part, and actuating means are provided for rotating the rotary wedge in an unlocking sense (Figures 57 to 60).

## Revendications

1. Ferrures de jonction pour l'assemblage amovible de deux éléments se joignant en formant un angle, de préférence un angle droit, consistant en deux pièces de ferrures (1, 2) pouvant être fixées à chacun des éléments de meubles à raccorder, dont une (1) est pourvue d'une partie en saillie (5, 6, 7) engageable qui est adaptée pour être insérée dans une ouverture (39) de l'autre pièce de ferrure (2) jusqu'à ce que les pièces de ferrures (1, 2) et/ou les élémentes de meubles se joignent, l'autre partie de ferrure (2) étant pourvue d'un coin (4) rotatif chargé par un ressort qui est monté de manière mobile dans un boîtier (13, 14) et s'engage dans la partie en saillie (5, 6, 7) à la manière d'un crochet et sert à verrouiller les parties de ferrures entre elles (1, 2), un dispositif de retenue étant prévu qui maintient le coin rotatif dans sa position déverouillée et qui le dégage lorsque celui-ci s'insère dans la partie en saillie de manière à ce que le coin rotatif saute dans sa position de verrouillage, caractérisées en ce que le dispositif de retenue consiste en une pièce résiliente (28) qui est reliée au coin rotatif (4) et qui dans la position déverouillée s'étend jusqu'au niveau de l'entrée de l'ouverture (39) et est encliquetée dans une pièce (37) solidaire du boîtier, et qu'un dispositif d'actionnement (21, 22) est prévu pour tourner le coin rotatif (4) en direction du déverouillage.

2. Ferrures de jonction selon la revendication 1 caractérisées en ce que le dispositif d'actionnement pour déverouiller le coin rotatif (4) consiste en un levier (21) qui est couché sur la plaque de couverture du boîtier (13, 14) et qui est fixé à angle droit sur un boulon (12) sur lequel le coin rotatif (4) est monté.

3. Ferrures de jonction selon la revendication 2 caractérisées en ce que dans la plaque de couverture du boîtier (13, 14) est logé de manière pivotante un disque (22) concentrique par rapport à l'axe du boulon et pourvu d'un levier de commande (25), disque qui est pourvu d'une ouverture (23) à forme de secteur qui avance par dessus le levier (21) qui est fixé au boulon (12).

4. Ferrures de jonction selon la revendication 3 caractérisées en ce que pour le montage du disque (22) celui-ci est pourvu d 'un bord biseauté (24) et la plaque de couverture d'un bord (24) comportant une rainure complémentaire correspondante pour recevoir le bord, que le levier d'actionnement (25) raccordé au disque (22) est engagé dans une ouverture à forme de secteur (27) de la plaque de couverture du boîtier (13, 14) et que le levier d'actionnement (25) est pourvu en sa face frontale extérieure d'une ouverture (40) pour recevoir dans la position non verrouillée du coin rotatif (4) une came en saillie qui est prévue sur le bord périphérique de l'ouverture à forme de secteur (26).

5. Ferrures de jonction selon l'une des revendications précédentes caractérisées en ce que la partie résiliente consiste en un ressort à lames (28) dont le raccordement avec le coin rotatif (4) est prévu à l'une de ses extrémités (27) et qui en son autre extrémité est pourvu d'une zone (29) ayant la forme d'un crochet pour l'encliquetage dans le boîtier et qui pour s'étendre jusqu'à la zone d'entrée de l'ouverture (39) comporte un onglet (30) dirigé vers l'extérieur, une des parties du boîtier (37, 38) s'avançant vers l'ouverture (39) étant prévue pour l'encliquetage.

6. Ferrures de jonction selon la revendication 5 caractérisées en ce que la partie du ressort à lames (28) formant l'onglet (30) est fourchée.

7. Ferrures de jonction pour l'assemblage amovible de deux éléments se joignant en formant un angle, de préférence un angle droit, consistant en deux pièces de ferrures (102, 103) pouvant être fixées à chacun des éléments de meubles à raccorder, dont une (103) est pourvue d'une partie en saillie (136) engageable qui est adaptée pour être insérée dans une ouverture (107) de l'autre pièce de ferrure (102) jusqu'à ce que les pièces de ferrures (102, 103) et/ou les éléments de meubles se joignent, l'autre partie de ferrure (102) étant pourvue d'un coin (101) rotatif chargé par un ressort qui est monté de manière mobile dans un boîtier (104, 105) et s'engage dans la partie en saillie (136) à la manière d'un crochet et sert à verrouiller les parties de ferrures (102, 103) entre elles, un dispositif de retenue étant prévu qui maintient le coin rotatif dans sa position déverouillée et qui le dégage lorsque celui-ci s'insère dans la partie en saillie de manière à ce que le coin rotatif saute dans sa position de verrouillage, caractérisées en ce que le dispositif de rétention consiste en un ressort à lames (131) fixé par son extrémité arrière (130) au boîtier (104, 105) et s'engage dans la partie en saillie (136) en forme de crochet afin d'amener les pièces de ferrure (102, 103) à s'emboîter, un dispositif de retenue étant prévu qui maintient le coin rotatif dans sa position déverouillée et liebère celui-ci lorsqu'il 'insère dans la partie en saillie de manière à ce que le coin rotatif saute dans sa position de verrouillage caractérisées en ce que le dispositif de retenue consiste en un ressort à lames (131) fixé par son extrémité arrière (130) au boîtier (104, 105) et qui comporte une extrémité avant libre qui est pourvue d'une bande (132) en forme de crochet, et comporte également une partie de déclenchement (133) qui dans l'état non verrouillé est couchée au niveau de l'entrée de l'ouverture, que le coin rotatif (101) est pourvu d'une pointe ou de moyens semblables (128) pour s'engager à la manière d'un crochet dans la courbure en forme de crochet (132) de manière à ce que la partie de déclenchement (133) débloque l'engagement en forme de crochet lorsque la partie en saillie (103) est insérée de manière à ce que le coin rotatif (101) saute dans sa position de verrouillage, et qu'un dispositif d'actionnement (121, 145) est prévu pour tourner le coin rotatif dans le sens du déverouillage.

8. Ferrures de jonction selon la revendication 7 caractérisées en ce qu'un ressort de torsion en spirale (119) est prévu qui presse le coin rotatif (101) dans la position de verrouillage et que la pointe est constituée par la branche courbée (128) du ressort de torsion (119) qui traverse le coin rotatif (101) dans un alésage (129).

9. Ferrures de jonction selon la revendication 7 ou 8 caractérisées en ce que la partie de déclenchement est formée par la partie médiane du ressort à lames (131), ladite partie médiane étant courbée ou à double angle pour former une montée (134) à la manière d'une rampe pour la partie en saillie (136).

10. Ferrures de jonction pour l'assemblage amovible de deux éléments se joignant en formant un angle, de préférence und angle droit, consistant en deux pièces de ferrures pouvant être fixées à chacun des éléments de meubles à raccorder, dont une est pourvue d'une partie en saillie engageable qui est adaptée pour être insérée dans une ouverture de l'autre pièce de ferrure jusqu'à ce que les pièces de ferrures et/ou les éléments de meubles se joignent, l'autre partie de ferrure étant pourvue d'un coin rotatif chargé par un ressort qui est monté de manière mobile dans un boîtier et s'engage dans la partie en saillie à la manière d'un crochet et sert à verrouiller les parties de ferrures entre elles, un dispositif de retenue étant prévu qui maintient le coin rotatif dans sa position déverouillée et qui le dégage lorsque celui-ci s'insère dans la partie en saillie de manière à ce que le coin rotatif saute dans sa position de verrouillage, caractérisées en ce que le coin rotatif est formé par une paroi cylindrique (154) qui augmente en hauteur en forme de coin et qui est formée sur un disque (155) et est interrompue avant l'extrémité avant du coin dans une zone qui repose dans l'ouverture dans la position déverouillée, que le dispositif de retenue consiste en un ressort à lames (165) qui est relié au coin rotatif et comprend une extrémité avant libre qui a été courbée pour former un chrochet (166) et qui effectue un engagement en forme d'un crochet entre le coin rotatif et le boîtier lorsque le coin rotatif a été pivoté dans sa position déverouillée, le ressort à lames étant pourvu d'un onglet (176) qui est relié au crochet (166) et avance dans l'ouverture pour éliminer l'engagement à la manière d'un crochet lorsque la partie en saillie est insérée, que le boîtier est pourvu latéralement par rapport à l'ouverture d'une marche (168) avec laquelle le crochet (166) s'engage dans la position d'attente et qu'un dispositif d'actionnement (161, 172) est prévu pour tourner le coin rotatif dans le sens de déverouillage (Fig. 39—56).

11. Ferrures de jonction pour l'assemblage amovible de deux éléments se joignant en formant un angle, de préférence un angle droit, consistant en deux pièces de ferrures pouvant être fixées à chacun des éléments de meubles à raccorder, dont une est pourvue d'une partie en saillie engageable qui est adaptée pour être insérée dans une ouverture de l'autre pièce de ferrure jusqu'à ce que les pièces de ferrures et/ou les éléments de meubles se joignent, l'autre partie de ferrure étant pourvue d'un coin rotatif chargé par un ressort qui est monté de manière mobile dans un boîtier (180, 181) et s'engage dans la partie en saillie à la manière d'un crochet et sert à verrouiller les parties de ferrures entre elles, un dispositif de retenue étant prévu qui maintient le coin rotatif (114, 115) dans sa position déverouillée et qui le dégage lorsque celui-ci s'insère dans la partie en saillie de manière à ce que le coin rotatif saute dans sa position de verrouillage, caractérisées en ce qu'un poussoir (184) est guidé dans le boîtier (180, 181) dans un plan qui est parallèle au coin rotatif (114, 115), ledit poussoir étant adapté pour être refoulé contre la force du ressort (188) et est pourvu d'une butée (189) pour bloquer le coin rotatif dans une position d'attente dans laquelle le coin rotatif est revenu à partir de l'ouverture d'insertion (107), ledit poussoir étant pourvu d'une surface oblique qui sert au déblocage, est disposée dans l'ouverture d'insertion et est adaptée pour être refoulée par l'autre pièce de ferrure, et qu'un dispositif d'actionnement est prévu pour tourner le coin rotatif dans le sens du déverouillage (Fig. 57—60).

FIG.1

FIG.3

FIG.4

FIG.2

FIG.5

FIG.6

FIG.7

FIG.8

FIG.9

FIG.10

FIG.11

FIG.12

FIG.13

FIG.14

FIG.15

FIG.16

FIG.17

# FIG. 18

109 127 126 119 124 120 102

116

117 108 128 101 115

114

# FIG. 19

110 105 112 104

111 132 129 113

118 131 133

134

130 107 106

## FIG. 20

136
103
135
136'
137

## FIG. 21

128
126
119

## FIG. 22

120
121
138
125
123

## FIG. 23

141
139
125
140
138

FIG. 24

FIG. 25

FIG. 26

FIG. 27

FIG. 28

FIG. 29

FIG.30

FIG.31

FIG.32

FIG.33

FIG.34

FIG.35

FIG.36

FIG.37

FIG.38

FIG.41

170

FIG.39

161  156  154

XXIII

XXIII

157  162  103

FIG.42

163  162

155

FIG.43  166  167

160

FIG.44  165

FIG.40  168

FIG.45

FIG.46

155

154

FIG.47

160

155

159

154

164

158

FIG.48

FIG.49

FIG.50

FIG.51

FIG.52

FIG.53

# FIG.54

# FIG.55

172

173

173 174

# FIG.56

FIG. 57

FIG.58

FIG.59

FIG.60